# EUROPÄISCHE PATENTSCHRIFT

(11) **EP 3 969 844 B1**
(45) Veröffentlichungstag und Bekanntmachung des Hinweises auf die Patenterteilung: **26.06.2024**
(21) Anmeldenummer: 20726761.8
(22) Anmeldetag: 14.05.2020
(51) Int. Cl.: G01B 11/275, G01B 21/26, G01B 5/255, B60B 30/00, B60B 30/02

(54) **RADHALTER**
WHEEL HOLDER
SUPPORT DE ROUE

(30) Priorität: 17.05.2019 DE 102019113128
(43) Veröffentlichungstag der Anmeldung: 23.03.2022
(73) Patentinhaber: Beissbarth Automotive Testing Solutions GmbH, 80993 München (DE)
(72) Erfinder: HOFMANN, Claudia, 80993 München (DE); PETERS, Stefanie, 80993 München (DE); TRENDAFIL, Ilchev, 80993 München (DE); WAGMANN, Christian, 80993 München (DE); GANSER, Nicolai, 80993 München (DE)
(74) Vertreter: Schmitt-Nilson Schraud Waibel Wohlfrom Patentanwälte Partnerschaft mbB
(86) Internationale Anmeldenummer: PCT/EP2020/063476
(87) Internationale Veröffentlichungsnummer: WO 2020/234113

(56) Entgegenhaltungen:
- WO-A1-2017/093922
- WO-A1-2018/046222
- DE-B3- 10 242 536
- US-A1- 2014 115 906

## Beschreibung

Die Erfindung betrifft einen Radhalter, insbesondere einen Radhalter zur Fahrzeugvermessung. Die Erfindung betrifft auch ein Verfahren zum Montieren und ein Verfahren zum Demontieren eines solchen Radhalters an einem Rad eines Fahrzeugs, insbesondere eines Kraftfahrzeugs.

Zur Fahrzeugvermessung werden häufig Radhalter, die Sensoren und/oder Messmarken ("Targets") tragen können, an den Rädern des zu vermessenden Fahrzeugs montiert.

DE 10 242 536 B3 offenbart eine Vorrichtung zur Befestigung einer Achsmeßeinrichtung an einer Felge eines Rades eines Kraftfahrzeuges, mit einem Grundkörper, mit einer Mehrzahl von Stützarmen an dem Grundkörper, wobei sich die Stützarme in radialer Richtung erstrecken, und mit an den Stützarmen entlang eines in radialer Richtung erstreckenden Verstellweges verstellbar angeordneten Antastspitzen zur Halterung des Grundkörpers an der Felge. Die Antastspitzen sind derart miteinander gekoppelt, dass die Verstellung einer Antastspitze zu einer synchronen Verstellung zumindest einer weiteren Antastspitze führt, wobei, der Abstand zwischen der Mittellängsachse der Felge und der Antastspitze entlang des Verstellweges für jede Antastspitze gleich ist.

WO 2018/046222 A1 beschreibt einen Radadapter zur Befestigung an einem Rad, insbesondere an einem Rad eines Kraftfahrzeugs, wobei der Radadapter wenigstens zwei Arme aufweist, die sich von einem zentralen Bereich des Radadapters in einer radialen Richtung erstrecken; wobei jeder der Arme wenigstens ein bewegliches Element aufweist, das in radialer Richtung beweglich ist, um die Länge des Armes in radialer Richtung zu variieren; und wobei die beweglichen Elemente von wenigstens zwei Armen so mechanisch miteinander gekoppelt sind, dass eine Bewegung eines beweglichen Elements eines ersten Armes in radialer Richtung eine entsprechende Bewegung wenigstens eines beweglichen Elements eine zweiten Armes zur Folge hat.

Weitere Radadapter sind in den Dokumenten US 2014/115906 A1 und WO 2017/093922 A1 offenbart.

Die Handhabung solcher Radhalter, insbesondere ihre Montage und Demontage an bzw. von den Rädern des Fahrzeugs, ist in der Regel aufwändig und schwierig. Insbesondere sind dabei mehrere Arbeitsschritte erforderlich, die mit zwei Händen durchgeführt werden müssen. Es besteht die Gefahr, dass die Messergebnisse der Fahrzeugvermessung durch eine fehlerhafte und/oder ungenaue Montage der Radhalter verfälscht werden.

Es ist eine Aufgabe der Erfindung, die Montage und Demontage eines Radhalters an den Rädern eines Fahrzeugs zu vereinfachen und die Gefahr einer fehlerhaften und/oder ungenauen Montage zu reduzieren.

Diese Aufgabe wird durch den Radhalter des unabhängigen Patentanspruchs 1 und durch Verfahren des Anbringens und Lösens eines Radhalters nach den Patentansprüchen 14 und 15 gelöst. Vorteilhafte Weiterbildungen ergeben sich aus den abhängigen Patentansprüchen.

Die Erfindung betrifft einen Radhalter, der zur Befestigung an einem Rad, insbesondere an einem Rad eines Kraftfahrzeugs, vorgesehen ist und wenigstens zwei Arme hat, die sich von einem Zentrum des Radhalters in radialer Richtung nach außen erstrecken. Jeder Arm weist ein stationäres Element und wenigstens ein gegenüber dem stationären Element bewegliches Element, z.B. einen Schlitten, auf. Das bewegliche Element ist in radialer Richtung gegenüber dem stationären Element bewegbar, so dass die Länge jedes Armes durch Bewegen des beweglichen Elements in radialer Richtung variierbar ist.

Der Radhalter hat ein Synchronisationssystem mit einem zentralen Rotationselement, das rotierbar im Zentrum des Radhalters angeordnet ist, und wenigstens zwei Kopplungselementen, die sich jeweils derart zwischen einem der beweglichen Elemente und dem zentralen Rotationselement erstrecken, dass die beweglichen Elemente durch Rotieren des Rotationselements in radialer Richtung bewegbar sind und das Rotationselement umgekehrt durch Bewegen wenigstens eines der beweglichen Elemente rotierbar ist.

Die Länge der Arme eines erfindungsgemäß ausgebildeten Radhalters kann durch Bewegen der beweglichen Elemente in radialer Richtung einfach variiert werden, um den Radhalter an einem Rad zu fixieren bzw. von dem Rad zu lösen. Das Synchronisationssystem synchronisiert die Bewegungen der beweglichen Elemente, so dass sich alle beweglichen Elemente stets synchron, d.h. alle nach innen oder alle nach außen, und über die gleiche Wegstrecke, bewegen.

Das Rotationselement ist durch ein Freilaufsystem an der Grundplatte des Radhalters angebracht. Das Freilaufsystem weist wenigstens einen Betriebszustand auf, in dem das Rotationselement in einer Freilaufrichtung rotierbar ist und eine Rotation des Rotationselements in einer der Freilaufrichtung entgegengesetzten Sperrrichtung gesperrt ist.

Das Freilaufsystem weist insbesondere einen ersten und einen zweiten Betriebszustand auf, wobei die Freilaufrichtung und die Sperrrichtung im ersten und im zweiten Betriebszustand gegeneinander vertauscht sind.

Die Erfindung umfasst auch ein Verfahren des Montierens eines erfindungsgemäß ausgebildeten Radhalters an einem Rad, insbesondere an einem Rad eines Kraftfahrzeugs. Das Verfahren umfasst, das Freilaufsystem in einen Montagezustand zu bringen, in dem die beweglichen Elemente in radialer Richtung nach außen in eine Montageposition bewegbar sind und eine Bewegung der beweglichen Elemente nach innen gesperrt ist. Das Verfahren umfasst darüber hinaus, die beweglichen Elemente in radialer Richtung nach außen zu bewegen, um die Längen der Arme zu vergrößern; den Radhalter mit den verlängerten Armen auf ein Rad, insbesondere auf ein Rad eines Kraftfahrzeugs, aufzubringen; das Freilaufsystem in einen Fixierzustand zu bringen, in dem die beweglichen Elemente in radialer Richtung nach innen bewegbar sind und eine Bewegung der beweglichen Elemente nach außen gesperrt ist; und die beweglichen Elemente in radialer Richtung nach innen in eine Fixierposition zu bewegen, in der sie den Radhalter an dem Rad fixieren. Das Verfahren kann darüber hinaus umfassen, durch eine Spannvorrichtung zusätzliche, auf das Zentrum gerichtete, Kräfte auf die beweglichen Elemente auszuüben, um den Radhalter besonders sicher an dem Rad zu fixieren.

Die Erfindung umfasst auch ein Verfahren des Entfernens eines erfindungsgemäß ausgebildeten Radhalters von einem Rad, insbesondere von einem Rad eines Kraftfahrzeugs. Das Verfahren umfasst, das Freilaufsystem in den Montagezustand zu bringen, in dem die beweglichen Elemente in radialer Richtung nach au-ßen bewegbar sind und eine Bewegung der beweglichen Elemente nach innen gesperrt ist; die beweglichen Elemente in radialer Richtung nach außen in eine Montageposition zu bewegen, um die Längen der Arme zu vergrößern; und den Radhalter von dem Rad zu entfernen. Sofern der Radhalter mit einer Spannvorrichtung ausgestattet ist, umfasst das Verfahren zusätzlich, die Spannvorrichtung zu lösen, um die beweglichen Elemente in radialer Richtung nach außen bewegen zu können.

Ein erfindungsgemäß ausgebildeter Radhalter kann einfach und sicher an einem Rad montiert und von dem Rad demontiert werden. Aufgrund der Sperrwirkung des Freilaufmechanismus im Montagezustand müssen die beweglichen Elemente nicht mit Muskelkraft in der Montageposition gehalten werden, wenn der Radhalter auf das Rad aufgebracht wird. Insbesondere besteht keine Gefahr, dass die sich beweglichen Elemente unkontrolliert nach innen bewegen. Die Verletzungsgefahr beim Montieren des Radhalters wird dadurch erheblich reduziert. Ein erfindungsgemäßer Radhalter ist für Rechts- und Linkshänder gleichermaßen gut geeignet.

In einer Ausführungsform ist das Freilaufsystem als Ratschenmechanismus mit einem verzahnten Rotor und wenigstens einem in eine Verzahnung des Rotors eingreifenden beweglichen Sperrelement ausgebildet. Ein Ratschenmechanismus, wie er z.B. auch in Werkzeugen zum Einsatz kommt, stellt ein zuverlässiges und bewährtes Freilaufsystem zur Verfügung. Anstelle eines Ratschenmechanismus können aber auch andere Arten von Freilaufmechanismen eingesetzt werden. Zum Beispiel auch Freilaufmechanismen, wie sie an den Hinterrädern von Fahrrädern zum Einsatz kommen.

In einer Ausführungsform ist das Freilaufsystem zwischen einem ersten Betriebszustand, in dem das Rotationselement gegenüber den Armen im Uhrzeigersinn rotierbar ist und eine Rotation des Rotationselements gegen den Uhrzeigersinn gesperrt ist, und einem zweiten Betriebszustand, in dem das Rotationselement gegenüber den Armen gegen den Uhrzeigersinn rotierbar ist und eine Rotation des Rotationselements im Uhrzeigersinn gesperrt ist, umschaltbar. Auf diese Weise kann das Freilaufsystem zwischen dem Montagezustand und dem Fixierzustand umgeschaltet werden.

In einer Ausführungsform ist das Freilaufsystem in einen dritten Betriebszustand schaltbar, in dem das Rotationselement frei in beide Richtungen rotierbar ist. Die Sperrfunktion des Freilaufmechanismus ist in diesem Betriebszustand deaktiviert, und die beweglichen Elemente sind in beide Richtungen, d.h. nach innen und nach außen, frei beweglich.

In diesem dritten Betriebszustand verhält sich der Radadapter wir ein herkömmlicher Radadapter, der kein Freilaufsystem aufweist. Der dritte Betriebszustand ermöglicht es einem an die Benutzung eines herkömmlichen Radadapters gewöhnten Benutzer, einen erfindungsgemäßen Radadpater zu benutzen, ohne sich umstellen zu müssen. Der Einsatzbereich des Radadapters wird dadurch erweitert.

In einer Ausführungsform weist der Radhalter eine Spannvorrichtung auf, die dazu ausgebildet ist, in einem gespannten Zustand eine Kraft auf das Freilaufsystem auszuüben, um durch Rotieren des Freilaufsystems zusätzliche Kräfte ("Spannkräfte") auf die beweglichen Elemente auszuüben, die auf das Zentrum des Radhalters gerichtet sind. Durch Aufbringen zusätzlicher, auf das Zentrum des Radhalters gerichteter Kräfte auf die beweglichen Elemente kann der Radhalter besonders sicher an dem Rad fixiert werden.

In einer Ausführungsform umfasst die Spannvorrichtung einen Spanngriff und ein Spannkraft-Übertragungselement. Das Spannkraft-Übertragungselement ist ausgebildet, eine auf den Spanngriff ausgeübte Spannkraft auf das Ratschensystem bzw. das Rotationselement zu übertragen. Das Spannkraft-Übertragungselement kann eine Stange, eine Kette, einen Draht- oder Seilzug, einen Riemen und/oder ein Hydrauliksystem umfassen.

In einer Ausführungsform weist die Spannvorrichtung einen Feststellmechanismus auf, der es ermöglicht, die Spannvorrichtung in einem gespannten Zustand zu arretieren, so dass die von der Spannvorrichtung erzeugte Spannkraft ohne weitere Einwirkung eines Bedieners, insbesondere ohne manuelles Festhalten des Spanngriffs, auf die beweglichen Elemente aufgebracht wird. Der Feststellmechanismus kann insbesondere einen lösbaren Ratschenmechanismus, z.B. mit einer Sägezahngeometrie, umfassen, der die Spannvorrichtung automatisch in einem gespannten Zustand arretiert und der lösbar ist, um den Radhalter vom Rad entfernen zu können.

In einer Ausführungsform hat das Freilaufsystem einen rotierbar an der Grundplatte angebrachten Hauptkörper und einen mit dem Rotationselement verbundenen Rotationskörper. Das Kraftübertragungselement ist mit dem Hauptkörper des Freilaufsystems verbunden, um das Rotationselement durch Ausüben einer Spannkraft auf den Hauptkörper des Freilaufsystem so spannen zu können, dass es eine zusätzliche Kraft auf die beweglichen Elemente ausübt.

In einer Ausführungsform hat der Radhalter wenigstens eine Antriebsvorrichtung, die über ein Kraftübertragungselement mit einem der beweglichen Elemente verbunden und dazu ausgebildet ist, über das Kraftübertragungselement eine auf das Zentrum des Radhalters gerichtete Kraft auf das eine bewegliche Element auszuüben.

In einer Ausführungsform erstreckt sich das wenigstens eine Kraftübertragungselement im Wesentlichen parallel zu einem der Arme, insbesondere entlang eines der Arme des Radhalters. Auf diese Weise kann die Kraft besonders effizient von der Antriebsvorrichtung auf die beweglichen Elemente des Radhalters übertragen werden.

In einer Ausführungsform umfasst das wenigstens eine Kraftübertragungselement eine Stange, eine Kette, einen Draht, einen Seilzug, insbesondere einen Stahlseilzug, wie er in einem Bowdenzug verwendet wird, oder einen Riemen. Ein solches Kraftübertragungselement ist flexibel, so dass es einfach zwischen der Antriebsvorrichtung und dem jeweiligen beweglichen Element verlegt werden kann. Ein flexibles Kraftübertragungselement kann beispielsweise um Rollen geführt werden. Ein flexibles Kraftübertragungselement kann auch auf einem rotierenden Element, beispielsweise einem Rad, einer Rolle oder einer Trommel, der Antriebsvorrichtung aufgewickelt werden, um eine Zugkraft auf das bewegliche Element auszuüben.

In einer Ausführungsform weist die wenigstens eine Antriebsvorrichtung ein Rad, eine Rolle oder eine Trommel auf, und das wenigstens eine Kraftübertragungselement ist auf dem Rad, der Rolle oder der Trommel aufwickelbar, um eine Zugkraft auf das bewegliche Element auszuüben. In einer Ausführungsform ist das Rad, die Rolle oder die Trommel um eine Achse rotierbar ist, die orthogonal zu einer gemeinsamen Ebene der Arme ausgerichtet ist. Auf diese Weise kann die Zugkraft effizient von der Antriebsvorrichtung auf eines der beweglichen Elemente übertragen werden.

In einer Ausführungsform umfasst die wenigstens eine Antriebsvorrichtung ein elastisches Element, das ausgebildet ist, das Kraftübertragungselement anzutreiben. Das elastische Element kann beispielsweise eine Spiralfeder sein. Eine Spiralfeder ermöglicht es, eine kostengünstige und zuverlässige Antriebsvorrichtung zur Verfügung zu stellen.

In einer Ausführungsform ist die wenigstens eine Antriebsvorrichtung außerhalb des Zentrums des Radhalters, insbesondere in einem Abstand von einer zentralen Achse ("Rotationselementachse"), um die das Rotationselement rotiert, angeordnet. In einer Ausführungsform ist die wenigstens eine Antriebsvorrichtung insbesondere in einem Bereich/Winkel zwischen zwei benachbarten Armen des Radhalters angeordnet. Die wenigstens eine Antriebsvorrichtung kann insbesondere in der Nähe der Grundplatte und/oder an die Grundplatte angrenzend zwischen zwei benachbarten Armen des Radhalters angeordnet sein.

Eine solche Konfiguration ermöglicht einen besonders platzsparenden und kompakten Aufbau des Radhalters. Insbesondere kann die Abmessung (Dicke) des Radhalters in einer Richtung orthogonal zu der von den Armen des Radhalters aufgespannten Ebene gering gehalten werden. Darüber hinaus ermöglicht es eine solche Konfiguration, die von der wenigstens einen Antriebsvorrichtung erzeugten Kraft effizient auf wenigstens eines der beweglichen Elemente zu übertragen.

In einer anderen Ausführungsform ist die wenigstens eine Antriebsvorrichtung im Zentrum des Radhalters, insbesondere auf der Rotationselementachse, angeordnet.

In einer Ausführungsform weist der Radhalter wenigstens zwei Antriebsvorrichtungen und wenigstens zwei Kraftübertragungselemente auf. Durch die Verwendung von zwei oder mehr Antriebsvorrichtungen kann die insgesamt auf die beweglichen Elemente einwirkende elastische Kraft ("Gesamtkraft") erhöht werden. Durch Aufbringen einer großen Gesamtkraft kann der Radhalter besonders sicher und fest an dem Rad fixiert werden.

In einer Ausführungsform sind die Antriebsvorrichtungen zwischen verschiedenen Armen des Radhalters angeordnet und wirken auf verschiedene bewegliche Elemente des Radhalters ein. Durch Verteilen der von den Antriebsvorrichtungen ausgeübten Kräfte auf mehrere bewegliche Elemente können die auf die Kopplungselemente und das Rotationselement einwirkenden Kräfte reduziert werden. Die Kopplungselemente und das Rotationselement können dann weniger massiv, d.h. leichter und aus weniger Material, und damit kostengünstiger ausgebildet werden.

In einer Ausführungsform ist das Rotationselement um eine Rotationselementachse rotierbar, die orthogonal zu einer gemeinsamen Ebene der Arme ausgerichtet ist, und/oder die Kopplungselemente erstrecken sich im Wesentlichen parallel zu einer virtuellen Ebene, die von den Armen aufgespannt wird. Auf diese Weise können die Bewegungen der beweglichen Elemente besonders effizient miteinander synchronisiert werden.

In einer Ausführungsform ist das Rotationselement als sternförmiges Rotationselement mit einem zentralen Bereich und wenigstens zwei Rotationselementarmen ausgebildet, und jedes der Kopplungselemente ist mit einem der Rotationselementarme verbunden. Durch ein mit den Rotationselementarmen ausgebildetes sternförmiges Rotationselement kann mit geringem Materialeinsatz eine mechanische Übersetzung realisiert werden, um die Wegstrecken, über die sich die Kopplungselemente bewegen, wenn das Rotationselement um einen vorgegebenen Winkel rotiert, zu vergrößern.

In einer Ausführungsform sind die Kopplungselemente jeweils schwenkbar mit dem Rotationselement und den beweglichen Elementen verbunden, um eine effiziente Kraftübertragung von dem Rotationselement auf die beweglichen Elemente zu ermöglichen.

In einer Ausführungsform hat der Radhalter drei Arme, die es ermöglichen, den Radhalter sicher an dem Rad zu befestigen. Die drei Arme können insbesondere in einer symmetrischen Konfiguration mit gleichen Winkelabständen von 120° zueinander ausgerichtet sein, aber auch andere Winkelabstände sind möglich.

In anderen möglichen Ausführungsformen hat der Radhalter mehr als drei Arme.

Ein Ausführungsbeispiel eines erfindungsgemäßen Radhalters wird im Folgenden unter Bezugnahme auf die beigefügten Figuren näher beschrieben.

### Kurze Beschreibung der Figuren

Figur 1 zeigt eine schematische Darstellung eines Rades mit einem an dem Rad montierten Radhalter.
Figur 2 zeigt eine perspektivische Ansicht eines Radhalters gemäß einem Ausführungsbeispiel der Erfindung.
Figur 3 zeigt eine Draufsicht auf den in der Figur 2 gezeigten Radhalter.
Figur 4 zeigt eine Explosionsansicht des in den Figuren 2 und 3 Radhalters.
Figur 5 zeigt eine Explosionsansicht einer Antriebsvorrichtung, wie sie in dem in den Figuren 2 bis 4 gezeigten Radhalter zum Einsatz kommt.
Figur 6 zeigt eine perspektivische Ansicht eines Freilaufsystems, wie es in dem in den Figuren 2 bis 4 gezeigten Radhalter zum Einsatz kommt.

### Figurenbeschreibung

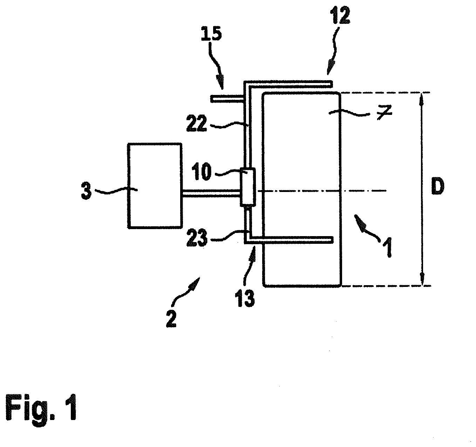

Die Figur 1 zeigt eine vereinfachte schematische Darstellung eines Rades 1 mit einem an dem Rad 1 montierten Radhalter 2, an dem ein Target 3 angebracht ist.

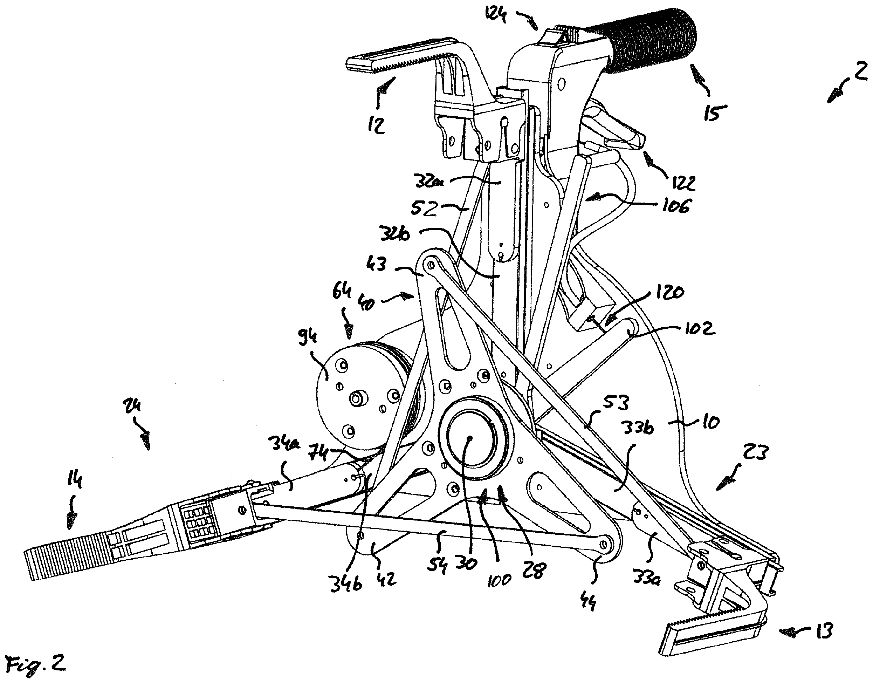

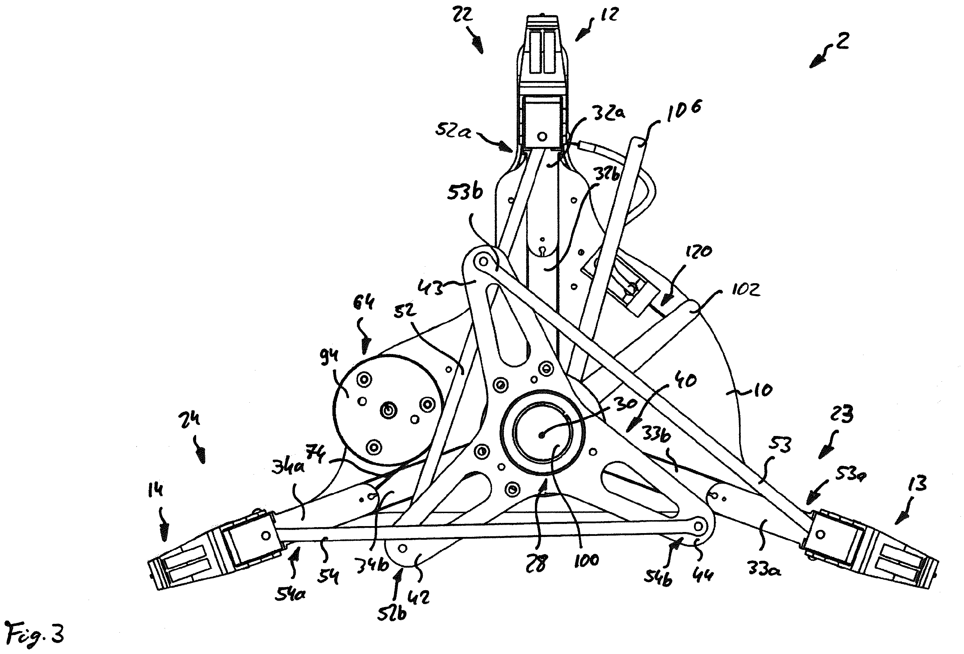

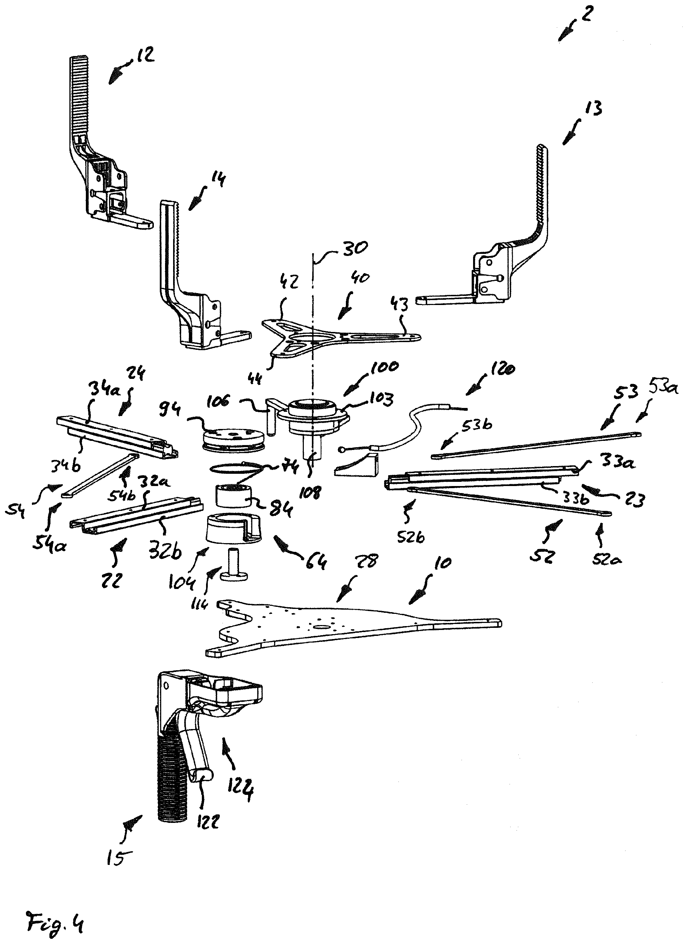

Figur 2 zeigt eine perspektivische Ansicht eines Radhalters 2 gemäß einem Ausführungsbeispiel der Erfindung. Figur 3 zeigt eine Draufsicht auf den in der Figur 2 gezeigten Radhalter, und Figur 4 zeigt eine Explosionsansicht des in der Figur 2 gezeigten Radhalters 2.

Der Radhalter 2 hat eine Grundplatte 10 und drei Arme 22, 23, 24, die sich von einem zentralen Bereich ("Zentrum") 28 des Radhalters 2 ausgehend in radialer Richtung nach außen erstrecken. Die Arme 22, 23, 24 erstrecken sich im Wesentlichen parallel zur Ebene der Grundplatte 10. Die Arme 22, 23, 24 können, müssen aber nicht, in gleichen Winkelabständen von 120° voneinander ausgerichtet sein.

An einem der Arme 22, 23, 24 ist ein Griff 15 ausgebildet, um den Transport und die Handhabung des Radhalters 2 zu vereinfachen.

Eine zentrale Achse ("Rotationselementachse") 30 erstreckt sich orthogonal zur Grundplatte 10 durch das Zentrum 28 des Radhalters 2.

Die Arme 22, 23, 24 umfassen jeweils ein stationäres inneres Element 32b, 33b, 34b und ein gegenüber dem stationären Element 32b, 33b, 34b bewegliches äu-ßeres Element 32a, 33a, 34a, das entlang des jeweiligen inneren Elements 32b, 33b, 34b in radialer Richtung bewegbar, insbesondere verschiebbar, ist. Die Länge der Arme 22, 23, 24 in radialer Richtung kann daher durch Bewegen, insbesondere Verschieben, der äußeren Elemente 32a, 33a, 34a entlang der inneren Elemente 32b, 33b, 34b variiert werden.

An äußere, vom Zentrum 28 abgewandte, Enden der äußeren Elemente 32a, 33a, 34a sind Klauen 12, 13, 14 montiert, die sich im Wesentlichen rechtwinklig zu den Armen 22, 23, 24 erstrecken. Die Klauen 12, 13, 14 sind dazu vorgesehen, auf der Lauffläche 7 eines (in den Figuren 2 bis 4 nicht gezeigten) Rades 1 aufzuliegen, wenn der Radhalter 2, wie in der Figur 1 gezeigt, an dem Rad 1 angebracht ist, um den Radhalter 2 an dem Rad 1 zu fixieren.

Durch Bewegen / Verschieben der äußeren Elemente 32a, 33a, 34a in radialer Richtung nach außen wird die Länge der Arme 22, 23, 24 verlängert, so dass der Radhalter 2 bequem in Axialrichtung des Rades 1 auf das Rad 1 aufgebracht werden kann. Durch Bewegen der äußeren Elemente 32a, 33a, 34a nach innen, d.h. in Richtung des Zentrums 28, wird die Länge der Arme 22, 23, 24 verkürzt, so dass die Klauen 12, 13, 14 auf der Lauffläche 7 des Rades 1 aufliegen und den Radhalter 2 am Rad 1 fixieren, wie es in der Figur 1 gezeigt ist.

Ein Radhalter 2 gemäß einem Ausführungsbeispiel der Erfindung umfasst darüber ein zentrales Rotationselement 40, beispielsweise eine Rotationsplatte 40. Das Rotationselement 40 ist so auf der zentralen Achse 30 im Zentrum 28 der Grundplatte 10 angebracht, dass es um die zentrale Achse 30 rotierbar ist. Das Rotationselement 40 erstreckt sich im Wesentlichen parallel zu der von der Grundplatte 10 und den Armen 22, 24, 24 aufgespannten virtuellen Ebene.

Jedes der beweglichen Elemente 32a, 33a, 34a ist durch jeweils ein Kopplungselement 52, 53, 54 mit dem Rotationselement 40 verbunden.

Ein dem Zentrum 28 zugewandtes inneres Ende 52b, 53b, 54b jedes Kopplungselements 52, 53, 54 ist beweglich, insbesondere schwenkbar, mit dem Rotationselement 40 verbunden. Ein von dem Zentrum 28 abgewandtes äußeres Ende 52a, 53a, 54a jedes Kopplungselements 52, 53, 54 ist beweglich, insbesondere schwenkbar, mit einem der beweglichen Elemente 32a, 33a, 34a verbunden. Die Kopplungselemente 52, 53, 54 sind somit gegenüber dem Rotationselement 40 und den beweglichen Elementen 32a, 33a, 34a in einer Ebene, die sich im Wesentlichen parallel zur Ebene der Grundplatte 10 erstreckt, schwenkbar.

Die Kopplungselemente 52, 53, 54 transformieren jede Rotationsbewegung des Rotationselements 40 um die zentrale Achse 30 in Translationsbewegungen der beweglichen Elemente 32a, 33a, 34a in radialer Richtung entlang der stationären inneren Elemente 32b, 33b, 34b, und umgekehrt. Die beweglichen Elemente 32a, 33a, 34a können somit durch Drehen des Rotationselements 40 um die zentrale Achse 30 synchron in radialer Richtung entlang der inneren Elemente 32b, 33b, 34b bewegt werden, um die Länge der Arme 22, 23, 24 zu variieren. Ebenso rotiert das Rotationselement 40 um die zentrale Achse 30, wenn die beweglichen Elemente 32a, 33a, 34a in radialer Richtung entlang der inneren Elemente 32b, 33b, 34b bewegt werden.

Durch das Rotationselement 40 und die Kopplungselemente 52, 53, 54 sind die beweglichen Elemente 32a, 33a, 34a der Arme 22, 23, 24 so miteinander gekoppelt, dass sich alle beweglichen Elemente 32a, 33a, 34a, und damit auch die Klauen 12, 13, 14, synchron, d.h. in der gleichen Richtung (nach "innen" oder "außen") und mit der gleichen Geschwindigkeit, bewegen, wenn eines der beweglichen Elemente 32a, 33a, 34a bewegt wird. Das Rotationselement 40 und die Kopplungselemente 52, 53, 54 bilden somit ein Synchronisationssystem.

Der Abstand zwischen den Klauen 12, 13, 14 eines erfindungsgemäßen Radadapters 2 kann daher durch Bewegen eines der beweglichen Elemente 32a, 33a, 34a auf einfache Weise so eingestellt werden, dass der Radhalter 2 bequem, insbesondere mit einer Hand, auf das Rad 1 aufgebracht werden kann.

In dem in den Figuren 2 bis 4 gezeigten Ausführungsbeispiel sind die Kopplungselemente 52, 53, 54 als Kopplungsstangen 52, 53, 54 ausgebildet. Die Kopplungsstangen 52, 53, 54 können z.B. aus gestanzten Blechen geformt sein.

Die Kopplungselemente 52, 53, 54 können auch eine andere Form haben, solange sie die zuvor beschriebene Funktion erfüllen, das Rotationselement 40 so mit den beweglichen Elemente 32a, 33a, 34a zu koppeln, dass eine Rotationsbewegung des Rotationselements 40 Translationsbewegungen der beweglichen Elemente 32a, 33a, 34a zur Folge hat, und umgekehrt.

In dem in den Figuren 2 bis 4 gezeigten Ausführungsbeispiel ist das Rotationselement 40 als sternförmiges Rotationselement 40 mit drei Rotationselementarmen 42, 43, 44 ("Rotationselement-Vorsprüngen") ausgebildet, die sich von einem zentralen Bereich des Rotationselements 40 in radialer Richtung nach außen erstrecken. Die inneren Enden 52b, 53b, 54b der Kopplungselemente 52, 53, 54 sind jeweils schwenkbar mit einem äußeren Bereich eines der Rotationselementarme 42, 43, 44 verbunden.

Durch eine sternförmige Ausgestaltung des Rotationselements 40 kann mit geringem Aufwand und Materialeinsatz eine mechanische Übersetzung realisiert werden, welche die Wegstrecke, über die sich die beweglichen Elemente 32a, 33a, 34a in radialer Richtung bewegen, wenn das Rotationselement 40 um einen vorgegebenen Winkel um die zentrale Achse 30 rotiert wird, vergrößert.

Die in den Figuren gezeigten Rotationselementarme 42, 43, 44 des Rotationselements 40 sind aber kein notwendiges Merkmal der Erfindung. Das Rotationselement 40 kann beispielsweise auch als runde, insbesondere als kreisförmige oder elliptische, Scheibe oder als eckige, z.B. als drei-, vier- oder vieleckige Scheibe, ausgebildet sein.

Ein Radhalter 2, der gemäß einem Ausführungsbeispiel der Erfindung ausgebildet ist, umfasst darüber hinaus wenigstens eine Antriebsvorrichtung 64, die dazu ausgebildet ist, wenigstens eines der beweglichen Elemente 32, 33, 34 anzutreiben.

Der in der Figuren 2 bis 4 gezeigte Radhalter 2 umfasst eine einzige Antriebsvorrichtung 64, die ausgebildet ist, das bewegliche Element 34a eines Armes 24 anzutreiben. Ein Radhalter 2, der gemäß einem Ausführungsbeispiel der Erfindung ausgebildet ist, kann aber auch mehrere Antriebsvorrichtungen 64, insbesondere eine eigene Antriebsvorrichtung 64 für jeden der Arme 22, 23, 24, aufweisen.

Die Antriebsvorrichtung 64 ist zwischen zwei benachbarten Armen 23, 24 des Radhalters 2 angeordnet. Die Antriebsvorrichtung 64 ist insbesondere in dem Winkel angeordnet, den zwei benachbarte Arme 23, 24 an der Grundplatte 10 miteinander ausbilden.

In einem alternativen Ausführungsbeispiel, das nicht in den Figuren gezeigt ist, ist die Antriebsvorrichtung 64 im Zentrum 28 des Radhalters 2, insbesondere auf der zentrale Achse ("Rotationselementachse") 30 angeordnet.

Die Antriebsvorrichtung 64 ist mit einem inneren Ende eines zugehörigen Kraftübertragungselements 74 verbunden. Ein äußeres Ende des Kraftübertragungselements 74 ist mit dem beweglichen Element 34a verbunden.

Die Antriebsvorrichtung 64 bildet zusammen mit dem Kraftübertragungselement 74 ein Antriebssystem 64, 74, welches das mit dem Kraftübertragungselement 74 verbundene bewegliche Element 34a antreibt. Die Antriebsvorrichtung 64 ist insbesondere dazu ausgebildet, eine elastische Kraft auf das Kraftübertragungselement 74 auszuüben, die das Kraftübertragungselement 74 und damit auch das mit dem Kraftübertragungselement 74 verbundene bewegliche Element 34a elastisch in Richtung des Zentrums 28 des Radhalters 2 zieht.

Obwohl der in den Figuren 2 bis 4 gezeigte Radhalter 2 nur eine Antriebsvorrichtung 64 aufweist, die nur eines der beweglichen Elemente 32a, 33a, 34a antreibt, bewirkt die Kopplung / Synchronisation der beweglichen Elemente 32a, 33a, 34a durch das Synchronisationssystem 40, 52, 53, 53, dass sich die beweglichen Elemente 32a, 33a, 34a und die Klauen 12, 13, 14 des Radhalters 2 synchron in radialer Richtung entlang der stationären Elemente 32b, 33b, 34b der Arme 22, 23, 24 bewegen, wenn eines der beweglichen Elemente 32a, 33a, 34a und/oder eine der Klauen 12, 13, 14 bewegt wird.

Die beweglichen Elemente 32a, 33a, 34a und/oder Klauen 12, 13, 14 können insbesondere gegen die von der Antriebsvorrichtung 64 erzeugte elastische Kraft, die in Richtung des Zentrums 28 des Radhalters 2 wirkt, z.B. mit Muskelkraft, nach au-ßen bewegt werden, um die Arme 22, 23, 24 so zu verlängern, dass der Radhalter 2 bequem auf ein Rad 1 aufgebracht oder von diesem entfernt werden kann.

Aufgrund der von der Antriebsvorrichtung 64 erzeugten, in Richtung auf das Zentrum 28 des Radhalters 2 gerichteten, elastischen Kraft passt sich der Radhalter 2 in Rahmen des Bewegungsspielraumes, d.h. der maximalen Weglänge, der äußeren Elemente 32a, 33a, 34a in radialer Richtung, automatisch an unterschiedliche Größen (Durchmesser D) des Rades 1 an. Ein erfindungsgemäßer Radhalter 2 kann daher sehr einfach an Rädern 1 unterschiedlicher Größen montiert und wieder von diesen Rädern 1 entfernt werden.

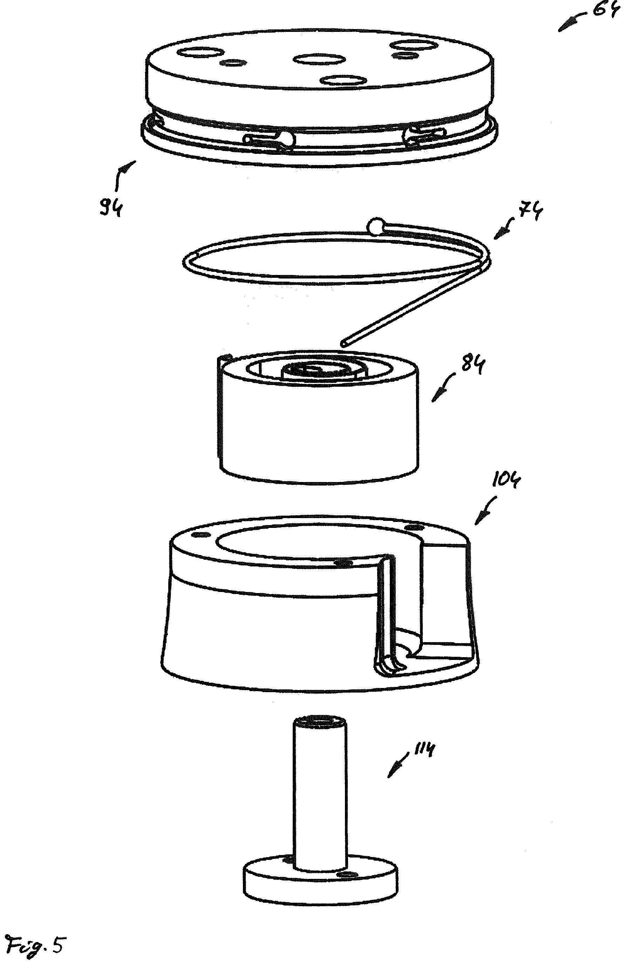

Figur 5 zeigt eine vergrößerte Explosionsansicht einer Antriebsvorrichtung 64 wie sie in einem Radhalter 2, der gemäß einem Ausführungsbeispiel der Erfindung ausgebildet ist, zum Einsatz kommen kann.

Die in der Figur 5 gezeigte Antriebsvorrichtung 64 hat ein im Wesentlichen rotationssymmetrisches Gehäuse 104, das sich um eine zentrale Achse 114 erstreckt. Auf der Achse 114 ist eine Trommel 94 angebracht. Die Trommel 94 ist um die Achse 114 rotierbar, und dazu ausgebildet, ein flexibles Kraftübertragungselement 74, z.B. ein flexibles Stahlseil, auf der Trommel 94 aufzuwickeln.

Die Achse 114 ist im Wesentlichen orthogonal zu der von den Armen 22, 23, 24 des Radhalters 2 aufgespannten Ebene ausgerichtet.

Das flexible Kraftübertragungselement 74 kann auch als Kette, Riemen, Draht oder Ähnliches ausgebildet sein, solange es auf eine Trommel 94 bzw. auf einem in den Figuren nicht gezeigten Rad oder ein ähnliches rotierendes Element aufwickelbar und in der Lage ist, eine ausreichend große Kraft von der Antriebsvorrichtung 64 auf das bewegliche Element 34a zu übertragen.

Zwischen der Trommel 94 und der Achse 114 ist ein elastisches Element 84, beispielsweise eine Spiralfeder, vorgesehen. Das elastische Element 84 ist derart mit der Trommel 94 und der Achse 114 verbunden, dass es die Trommel 94 so antreibt, dass die Trommel 94 bestrebt ist, um die Achse 114 zu rotieren und dabei das flexible Kraftübertragungselement 74 aufzuwickeln und dadurch zu verkürzen.

Durch das Aufwickeln des flexiblen Kraftübertragungselements 74 auf der Trommel 94 übt das Kraftübertragungselement 74 eine elastische (Zug-)Kraft auf das mit dem zweiten Ende des Kraftübertragungselements 74 verbundene (in der Figur 5 nicht gezeigte) bewegliche Element 34a aus, wobei die elastische Kraft bestrebt ist, das bewegliche Element 34a in Richtung auf das Zentrum 28 des Radhalters 2 zu ziehen.

Werden die Klauen 12, 13, 14 des Radhalters 2 auseinander gezogen, wird das Kraftübertragungselements 74 von der Trommel 94 abgewickelt.

Die durch das Abwickeln des Kraftübertragungselements 74 von der Trommel 94 bewirkte Rotation der Trommel 94 um die Achse 114 spannt das mit der Trommel 94 verbundene elastische Element 84 zusätzlich. Das bewegliche Element 34a des Radhalters 2 wird daher von dem Kraftübertragungselement 74 wieder in Richtung auf das Zentrum 28 des Radhalters 2 gezogen, sobald die zum Auseinanderziehen der beweglichen Elemente 32a, 33a, 34a bzw. Klauen 12, 13, 14 von einem Bediener aufgebrachte Kraft entfällt, z.B. weil die Klauen 12, 13, 14 losgelassen werden.

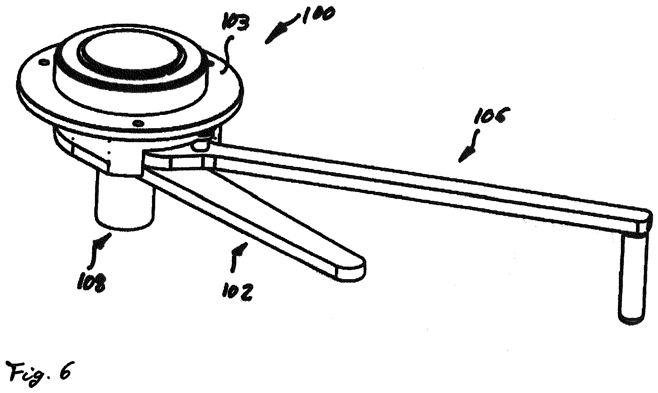

Das Rotationselement 40 ist über ein Freilaufsystem 100 an der Grundplatte 10 des Radhalters angebracht. Eine perspektivische Außenansicht des Freilaufsystems 100 ist in der Figur 6 gezeigt.

Das Freilaufsystem 100 hat einen an der Grundplatte 10 angebrachten Hauptkörper 108 und einen Rotationskörper 103, der gegenüber dem Hauptkörper 108 rotierbar ist. Das in der Figur 6 nicht gezeigte Rotationselement 40 wird an den Rotationskörper 103 montiert.

Das Freilaufsystem 100 hat darüber hinaus einen Umschalthebel 106, der es ermöglicht, das Freilaufsystem 100 zwischen wenigstens zwei verschiedenen Betriebszuständen umzuschalten.

In einem ersten Betriebszustand ist der Rotationskörper 103 mit dem Rotationselement 40 in der in den Figuren 2 und 3 gezeigten Ansicht gegenüber dem Hauptkörper 108 im Uhrzeigersinn rotierbar ("Freilaufrichtung"), und eine Rotation des Rotationskörpers 103 in die entgegengesetzte Richtung ("Sperrrichtung"), d.h. gegen den Uhrzeigersinn, ist gesperrt.

Im ersten Betriebszustand können die beweglichen Elemente 32a, 33a, 34a mit den Klauen 12, 13, 14 durch Muskelkraft und/oder durch die von der Antriebsvorrichtung 64 erzeugte Kraft in Richtung auf das Zentrum 28 des Radhalters 2 bewegt werden, um die Klauen 12, 13, 14 gegen die Lauffläche 7 eines Rades 1 zu drücken und den Radhalter 2 so sicher an dem Rad 1 zu fixieren. Der erste Betriebszustand ist daher ein Fixierzustand.

Da das Rotationselement 40 und der Rotationskörper 103 im ersten Betriebszustand / Fixierzustand gegenüber dem Hauptkörper 108 nicht gegen den Uhrzeigersinn rotierbar sind, können die beweglichen Elemente 32a, 33a, 34a und die Klauen 12, 13, 14 im ersten Betriebszustand / Fixierzustand nicht nach außen bewegt werden, um die Arme 22, 23, 24 zu verlängern, damit der Radhalter 2 vom Rad entfernt werden kann.

Um den Radhalter 2 vom Rad 1 entfernen zu können, wird das Freilaufsystem 100 durch Umlegen des Umschalthebels 106 in einen zweiten Betriebszustand gebracht. Im zweiten Betriebszustand ist der Rotationskörper 103 mit dem Rotationselement 40 in der in den Figuren 2 und 3 gezeigten Ansicht gegenüber dem Hauptkörper 108 gegen den Uhrzeigersinn rotierbar, und eine Rotation des Rotationskörpers 103 in die entgegengesetzte Richtung, d.h. im Uhrzeigersinn, gesperrt.

Im zweiten Betriebszustand sind also die Freilaufrichtung und die Sperrrichtung gegenüber dem ersten Betriebszustand gegeneinander vertauscht.

Im zweiten Betriebszustand können die beweglichen Elemente 32a, 33a, 34a mit den Klauen 12, 13, 14, z.B. durch Muskelkraft, vom Zentrum 28 des Radhalters 2 nach außen bewegt werden, um die Klauen 12, 13, 14 und den Radhalter 2 von dem Rad 1 entfernen zu können. Auch können die beweglichen Elemente 32a, 33a, 34a mit den Klauen 12, 13, 14 im zweiten Betriebszustand vor dem Aufbringen des Radhalters 2 auf das Rad 1 nach außen bewegt werden, um den Abstand zwischen den Klauen 12, 13, 14 auf die Größe des Rades 1 anzupassen und den Radhalter 2 bequem auf das Rad aufbringen zu können. Der zweite Betriebszustand ist daher ein Montagezustand.

Im zweiten Betriebszustand / Montagezustand verhindert die Sperrwirkung des Freilaufsystems 100, dass die beweglichen Elemente 32a, 33a, 34a mit den Klauen 12, 13, 14 von der Antriebsvorrichtung 64 in Richtung des Zentrums 28 gezogen werden. Die beweglichen Elemente 32a, 33a, 34a und die Klauen 12, 13, 14 bleiben daher im zweiten Betriebszustand / Montagezustand in ihren nach außen gezogenen Positionen, bis das Freilaufsystems 100 in den ersten Betriebszustand / Fixierzustand gebracht wird.

Da die beweglichen Elemente 32a, 33a, 34a und die Klauen 12, 13, 14 im zweiten Betriebszustand / Montagezustand nicht mit Muskelkraft in ihren äußeren Positionen festgehalten werden müssen, wird die Handhabung des Radhalters 2 vereinfacht. Darüber hinaus wird die Betriebssicherheit erhöht, da ein unkontrolliertes "Zurückschnappen" der beweglichen Elemente 32a, 33a, 34a und Klauen 12, 13, 14 in Richtung auf das Zentrum 28 des Radhalters 2 durch die Sperrwirkung des Freilaufsystems 100 verhindert wird.

Optional kann das Freilaufsystems 100 einen dritten Betriebszustand aufweisen, in dem die Sperrfunktion in beiden Richtungen deaktiviert ist, so dass der Rotationskörper 103 gegenüber dem Hauptkörper 108 in beiden Richtungen rotierbar ist.

Umschaltbare Freilaufsysteme 100, die geeignet sind, in einem erfindungsgemäßen Radhalter 2 eingesetzt zu werden, sind dem Fachmann bekannt.

Ein Freilaufsystem 100 kann beispielsweise mit einem außenverzahnten Rotor, der mit dem Rotationskörpers 103 verbunden ist, und einer mit dem Hauptkörper 108 verbundenen Sperrklinke ausgebildet sein, die so in die Außenverzahnung des Rotors eingreift, dass der Rotor nur in einer Richtung ("Freilaufrichtung") rotierbar ist und die Sperrklinke eine Rotation des Rotors in der entgegengesetzten Richtung ("Sperrrichtung") sperrt.

In einem erfindungsgemäßen Radhalter 2 können auch andere bekannte, insbesondere umschaltbare, Freilaufmechanismen, insbesondere Freilaufmechanismen, die in der Freilaufrichtung eine geringe Reibung und/oder in der Sperrrichtung eine ausreichend große Haltekraft haben, eingesetzt werden.

In einem erfindungsgemäßen Radhalter 2 ist der Hauptkörper 108 des Freilaufsystems 100 rotierbar an der Grundplatte 10 angebracht. Der Hauptkörper 108 ist mit einem Spannhebel 102 ausgebildet, der sich von einem zentralen Bereich des Hauptkörpers 108 in radialer Richtung nach außen erstreckt.

Ein Spannkraft-Übertragungselement 120 (siehe Figuren 2 bis 4) verbindet den Spannhebel 102 mit einem am Griff 15 des Radhalters 2 vorgesehenen Spanngriff 122. Der Spanngriff 122 und das Spannkraft-Übertragungselement 120 sind Bestandteile einer Spannvorrichtung 120, 122. Die Spannvorrichtung 120, 122 ermöglicht es, durch Betätigen des Spanngriffs 122 eine zusätzliche Kraft auf das Freilaufsystems 100 auszuüben, welche die Klauen 12, 13, 14 noch fester gegen die Lauffläche 7 des Rades 1 drückt, um den Radhalter 2 noch sicherer am Rad 1 zu fixieren.

Im/am Griff 15 des Radhalters 2 ist ein Feststellmechanismus 124 ausgebildet. Der Feststellmechanismus 124 ermöglicht es, den Spanngriff 122 und/oder das Spannkraft-Übertragungselement 120 in einer angespannten Position zu fixieren, in der die zusätzliche Kraft auf die Klauen 12, 13, 14 aufgebracht wird, ohne dass ein Benutzer des Radhalters 2 konstant Muskelkraft aufwenden muss, um den Spanngriff 122 in einer gespannten Position festzuhalten.

Der Feststellmechanismus 124 ist lösbar, so dass die Spannvorrichtung 120, 122 gelöst werden kann, um den Radhalter 2 einfach von dem Rad 1 demontieren zu können.

Das Spannkraft-Übertragungselement 120 kann als Seilzug (z.B. als "Bowdenzug"), insbesondere mit einem Stahlseil ausgebildet sein, wie in den Figuren 2 bis 4 gezeigt. Alternativ kann das Spannkraft-Übertragungselement 120 eine Stange, eine Kette, einen Riemen und/oder ein Hydrauliksystem umfassen, um die auf den Spanngriff 122 ausgeübte Kraft auf den Spannhebel 102 des Freilaufsystems 100 zu übertragen.

Um einen Radhalter 2, der gemäß einem Ausführungsbeispiel der Erfindung ausgebildet ist, an einem Rad 1 zu montieren, wird das Freilaufsystem 100 zunächst in den Montagezustand gebracht, in dem es möglich ist, die beweglichen Elemente 32a, 33a, 34a mit den Klauen 12, 13, 14 gegen die Kraft der Antriebsvorrichtung 64 nach außen zu ziehen und den Abstand zwischen den Klauen 12, 13, 14 (d.h. den "Durchmesser" des Radhalters 2) so zu vergrößern, dass der Radhalter 2 leicht auf das Rad 1 aufgebracht werden kann. Die Sperrwirkung des Freilaufsystems 100 im Montagezustand verhindert dabei ein in diesem Zustand unerwünschtes "Zurückschnappen" der Klauen 12, 13, 14. Die Klauen 12, 13, 14 müssen daher nicht mit Muskelkraft in einem auseinandergezogenen Zustand gehalten werden, wenn der Radadapter 2 auf das Rad 1 aufgebracht wird.

Der Radhalter 2 wird im auseinandergezogenen Zustand so auf das Rad aufgebracht, dass sich die Klauen 12, 13, 14 über die Lauffläche 7 des Rades 1 erstrecken.

Durch Umlegen des Umschalthebels 106 wird das Freilaufsystem 100 dann von dem Montagezustand in den Fixierzustand umgeschaltet. Im Fixierzustand gibt das Freilaufsystem 100 die Rotation des Rotationselements 40 so frei, dass die beweglichen Elemente 32a, 33a, 34a mit den Klauen 12, 13, 14 von der Kraft der Antriebsvorrichtung 64 in Richtung des Zentrums 28 des Radhalters 2 "nach innen" gezogen werden. Die Klauen 12, 13, 14 werden dabei gegen die Lauffläche 7 des Rades 1 gedrückt, wodurch sie den Radhalter 2 am Rad 1 fixieren.

Die Sperrwirkung des Freilaufsystems 100 im Fixierzustand verhindert, dass sich die beweglichen Elemente 32a, 33a, 34a wieder nach außen bewegen und so die Klauen 12, 13, 14 von der Lauffläche 7 des Rades 1 lösen können.

Wenn die Klauen 12, 13, 14 auf der Lauffläche 7 des Rades 1 aufliegen, kann durch Betätigen des Spanngriffs 122 über das Spannkraft-Übertragungselement 120, das Freilaufsystem 100 und das Synchronisationssystem 40, 52, 53, 54 eine zusätzliche Kraft auf die beweglichen Elemente 32a, 33a, 34a und die Klauen 12, 13, 14 aufgebracht werden, um den Radhalter 2 noch fester am Rad 1 zu fixieren.

Der Spanngriff 122 kann durch den Feststellmechanismus 124 in der gespannten Position fixiert werden, so dass es nicht notwendig ist, den Spanngriff 122 dauerhaft festzuhalten.

Zum Demontieren des Radhalters 2 wird zuerst der Feststellmechanismus 124 gelöst. Zusätzlich wird das Freilaufsystem 100 durch Umlegen des Umschalthebels 106 wieder in den Montagezustand gebracht, in dem es möglich ist, die beweglichen Elemente 32a, 33a, 34a mit den Klauen 12, 13, 14 nach außen zu bewegen, um den Radhalter 2 einfach vom Rad 1 abnehmen zu können. Dabei verhindert die Sperrwirkung des Freilaufsystems 100 im Montagezustand, dass sich die beweglichen Elemente 32a, 33a, 34a mit den Klauen 12, 13, 14 aufgrund der von der Antriebsvorrichtung 64 ausgeübten Kraft nach innen bewegen. Der Radhalter 2 kann so einfach von dem Rad 1 entfernt werden, ohne dass die Klauen 12, 13, 14 gegen die Kraft der Antriebsvorrichtung 64 festgehalten werden müssen. Insbesondere besteht keine Verletzungsgefahr durch unkontrolliert zurückschnappende Klauen 12, 13, 14.

Ein Radhalter 2, der gemäß einem Ausführungsbeispiel der Erfindung ausgebildet ist, kann daher einfach und sicher an einem Rad 1 montiert und von dem Rad 1 demontiert werden.

## Patentansprüche

1. Radhalter (2) zur Befestigung an einem Rad (1), insbesondere an einem Rad (1) eines Kraftfahrzeugs, wobei der Radhalter (2) aufweist:
wenigstens zwei Arme (22, 23, 24), die sich von einer Grundplatte (10) des Radhalters (2) in radialer Richtung nach außen erstrecken; wobei jeder der Arme (22, 23, 24) wenigstens ein bewegliches Element (32, 33, 34) aufweist, das in radialer Richtung beweglich ist;
ein zentrales Rotationselement (40), das rotierbar in einem Zentrum (28) des Radhalters (2) angeordnet ist;
wenigstens zwei Kopplungselemente (52, 53, 54), die sich jeweils derart zwischen einem der beweglichen Elemente (32, 33, 34) und dem zentralen Rotationselement (40) erstrecken, dass die beweglichen Elemente (32, 33, 34) durch Rotieren des Rotationselements (40) in radialer Richtung bewegbar sind;
**dadurch gekennzeichnet, dass**
das Rotationselement (40) über ein Freilaufsystem (100) an der Grundplatte (10) des Radhalters angebracht ist und wobei das Freilaufsystem (100) wenigstens einen Betriebszustand aufweist, in dem das Rotationselement (40) in einer Freilaufrichtung rotierbar ist und eine Rotation des Rotationselements (40) in einer der Freilaufrichtung entgegengesetzten Sperrrichtung gesperrt ist.

2. Radhalter (2) nach Anspruch 1, wobei das Freilaufsystem (100) zwischen einem ersten Betriebszustand, in dem das Rotationselement (40) im Uhrzeigersinn rotierbar und eine Rotation des Rotationselements (40) gegen den Uhrzeigersinn gesperrt ist, und einem zweiten Betriebszustand, in dem das Rotationselement (40) gegen den Uhrzeigersinn rotierbar und eine Rotation des Rotationselements (40) im Uhrzeigersinn gesperrt ist, umschaltbar ist, wobei das Freilaufsystem (100) insbesondere in einen dritten Betriebszustand schaltbar ist, in dem das Rotationselement (40) in beide Richtungen rotierbar ist.

3. Radhalter (2) nach einem der vorangehenden Ansprüche, wobei der Radhalter (2) zusätzlich eine Spannvorrichtung (120, 122) aufweist, die dazu ausgebildet ist, in einem gespannten Zustand eine Kraft auf das Freilaufsystem (100) auszuüben, um durch Rotieren des Freilaufsystems (100) zusätzliche Kräfte auf die beweglichen Elemente (32, 33, 34) auszuüben, die auf das Zentrums (28) des Radhalters (2) gerichtet sind.

4. Radhalter (2) nach Anspruch 3, wobei die Spannvorrichtung (120, 122) einen Spanngriff (122) und ein Spannkraft-Übertragungselement (120) umfasst, das ausgebildet ist, eine auf den Spanngriff (122) ausgeübte Kraft auf das Freilaufsystem (100) zu übertragen.

5. Radhalter (2) nach Anspruch 3 oder 4, wobei die Spannvorrichtung (120, 122) einen Feststellmechanismus (124) aufweist, der ausgebildet ist, die Spannvorrichtung (120, 122) im gespannten Zustand zu arretieren, wobei der Feststellmechanismus (140) insbesondere einen lösbaren Ratschenmechanismus umfasst.

6. Radhalter (2) nach Anspruch 5, wobei das Spannkraft-Übertragungselement (120) eine Stange, eine Kette, einen Draht- oder Seilzug, einen Riemen und/ oder ein Hydrauliksystem umfasst.

7. Radhalter (2) nach einem der Ansprüche 4 bis 6, wobei das Freilaufsystem (100) einen rotierbar an der Grundplatte (10) angebrachten Hauptkörper (108) und einen mit dem Rotationselement (40) verbundenen Rotationskörper (103) umfasst und wobei das Kraftübertragungselement (120) mit dem Hauptkörper (108) des Freilaufsystems (100) verbunden ist.

8. Radhalter (2) nach einem der vorangehenden Ansprüche, mit wenigstens einer Antriebsvorrichtung (64), die über ein Kraftübertragungselement (74) mit einem der beweglichen Elemente (32, 33, 34) verbunden und dazu ausgebildet ist, über das Kraftübertragungselement (74) eine auf das Zentrum (28) des Radhalters (2) gerichtete Kraft auf das eine bewegliche Element (34) auszuüben.

9. Radhalter (2) nach Anspruch 8, wobei sich das wenigstens eine Kraftübertragungselement (74) im Wesentlichen parallel zu einem der Arme (22, 23, 24), insbesondere entlang eines der Arme (22, 23, 24), erstreckt, und/oder wobei das wenigstens eine Kraftübertragungselement (74) eine Kette, einen Draht, einen Seilzug, einen Riemen oder eine Stange umfasst.

10. Radhalter (2) nach Anspruch 8 oder 9, wobei die wenigstens eine Antriebsvorrichtung (64) ein Rad, eine Rolle oder eine Trommel (94) aufweist und wobei das wenigstens eine Kraftübertragungselement (74) auf dem Rad, der Rolle oder der Trommel (94) aufwickelbar ist, wobei das Rad, die Rolle oder die Trommel (94) insbesondere um eine Achse (114) rotierbar ist, die orthogonal zu einer gemeinsamen Ebene der Arme (22, 23, 24) ausgerichtet ist.

11. Radhalter (2) nach einem der Ansprüche 8 bis 10, wobei die wenigstens eine Antriebsvorrichtung (64) ein elastisches Element (84), insbesondere eine Spiralfeder, aufweist, das ausgebildet ist, das Kraftübertragungselement (74) anzutreiben

12. Radhalter (2) nach einem der Ansprüche 8 bis 11, wobei die wenigstens eine Antriebsvorrichtung (64) außerhalb des Zentrums (28) des Radhalters (2) angeordnet ist, wobei die wenigstens eine Antriebsvorrichtung (64) insbesondere in einem Bereich zwischen zwei Armen (22, 23, 24) des Radhalters (2) angeordnet ist.

13. Radhalter (2) nach einem der vorangehenden Ansprüche, wobei der Radhalter (2) drei Arme (22, 23, 24) aufweist, wobei die drei Arme (22, 23, 24) insbesondere in Winkelabständen von 120° um das Zentrum (28) des Radhalters (2) angeordnet sind.

14. Verfahren des Anbringens eines Radhalters (2) nach einem der Ansprüche 1 bis 13 an einem Rad (1), insbesondere an einem Rad (1) eines Kraftfahrzeugs, wobei das Verfahren umfasst,
das Freilaufsystem (100) in einen Montagezustand zu bringen, in dem die beweglichen Elemente (32, 33, 34) in radialer Richtung nach außen bewegbar sind und eine Bewegung der beweglichen Elemente (32, 33, 34) nach innen gesperrt ist;
die beweglichen Elemente (32, 33, 34) in radialer Richtung nach außen zu bewegen, um die Längen der Arme (22, 23, 24) zu vergrößern;
den Radhalter (2) auf ein Rad (1), insbesondere ein Rad (1) eines Kraftfahrzeugs, aufzubringen; und
das Freilaufsystem (100) in einen Fixierzustand zu bringen, in dem die beweglichen Elemente (32, 33, 34) in radialer Richtung nach innen bewegbar sind und eine Bewegung der beweglichen Elemente (32, 33, 34) nach außen gesperrt ist; und
die beweglichen Elemente (32, 33, 34) in Richtung auf das Zentrum (28) zu bewegen, um den Radhalter (2) an dem Rad (1) zu fixieren;
wobei das Verfahren insbesondere umfasst, durch eine Spannvorrichtung (120, 122) auf das Zentrum (28) gerichtete Kräfte auf die beweglichen Elemente (32, 33, 34) auszuüben.

15. Verfahren des Lösens eines Radhalters (2) nach einem der Ansprüche 1 bis 13 von einem Rad (1), insbesondere von einem Rad (1) eines Kraftfahrzeugs, wobei das Verfahren umfasst,
eine Spannvorrichtung (120, 122) zu lösen und/oder das Freilaufsystem (100) in einen Montagezustand zu bringen, in dem die beweglichen Elemente (32, 33, 34) in radialer Richtung nach außen bewegbar sind und eine Bewegung der beweglichen Elemente (32, 33, 34) nach innen gesperrt ist;
die beweglichen Elemente (32, 33, 34) in radialer Richtung nach außen zu bewegen, um die Längen der Arme (22, 23, 24) zu vergrößern; und
den Radhalter (2) von dem Rad (1) zu entfernen.

## Claims

1. A wheel holder (2) for fastening to a wheel (1), in particular to a wheel (1) of a motor vehicle, the wheel holder (2) comprising:
at least two arms (22, 23, 24) extending from a base plate (10) of the wheel holder (2) in a radial direction outward; each of the arms (22, 23, 24) having at least one movable element (32, 33, 34) that is movable in the radial direction;
a central rotation element (40) that is disposed in a center (28) of the wheel holder (2) such that it can rotate;
at least two coupling elements (52, 53, 54) each extending between one of the movable elements (32, 33, 34) and the central rotation element (40) such that the movable elements (32, 33, 34) are movable in the radial direction by rotation of the rotation element (40);
**characterized in that** the rotation element (40) is attached to the base plate (10) of the wheel holder with a freewheeling system (100), and wherein the freewheeling system (100) has at least one operating state in which the rotation element (40) is rotatable in a freewheeling direction and rotation of the rotation element (40) in a blocking direction opposite to the freewheeling direction is blocked.

2. The wheel holder (2) according to claim 1,
wherein the freewheeling system (100) is switchable between a first operating state in which the rotation element (40) is rotatable in clockwise direction and rotation of the rotation element (40) in anticlockwise direction is blocked, and a second operating state in which the rotation element (40) is rotatable in anticlockwise direction and rotation of the rotation element (40) in clockwise direction is blocked, wherein the freewheeling system (100) in particular can be switched into a third operating state in which the rotation element (40) is rotatable in both directions.

3. The wheel holder (2) according to any of the preceding claims,
wherein the wheel holder (2) comprises in addition a clamping device (120, 122) which is adapted to apply a force to the freewheeling system (100) in a tensioned state in order to apply additional forces which are directed towards the center (28) of the wheel holder (2), to the movable elements (32, 33, 34) by rotation of the freewheeling system (100).

4. The wheel holder (2) according to claim 3,
wherein the clamping device (120, 122) comprises a clamping handle (122) and a clamping force transmitting element (120) which is designed to transfer a force exerted on the clamping handle (122) to the freewheeling system (100).

5. The wheel holder (2) according to claim 3 or 4,
wherein the clamping device (120, 122) comprises a locking mechanism (124) which is designed to lock the clamping device (120, 122) in the tensioned state, the locking mechanism (140) comprising in particular a releasable ratchet mechanism.

6. The wheel holder (2) according to claim 5,
wherein the clamping force transmitting element (120) comprises a rod, a chain, a wire or cable pull, a belt and/or a hydraulic system.

7. The wheel holder (2) according to any of claims 4 to 6,
wherein the freewheeling system (100) comprises a main body (108) rotatably attached to the base plate (10), as well as a rotation body (103) connected to the rotation element (40), and wherein the force transmitting element (120) is connected to the main body (108) of the freewheeling system (100).

8. The wheel holder (2) according to any of the preceding claims,
comprising at least one drive device (64) which is connected to one of the movable elements (32, 33, 34) via a force transmitting element (74) and is designed to apply to said one movable element (34) a force directed towards the center (28) of the wheel holder (2) via the force transmitting element (74).

9. The wheel holder (2) according to claim 8,
wherein the at least one force transmitting element (74) extends substantially parallel to one of the arms (22, 23, 24), in particular along one of the arms (22, 23, 24), and/or wherein the at least one force transmitting element (74) comprises a chain, a wire, a cable pull, or a belt or a rod.

10. The wheel holder (2) according to claim 8 or 9,
wherein the at least one drive device (64) comprises a wheel, a roller or a drum (94) and wherein the at least one force transmitting element (74) is adapted to be wound onto the wheel, the roller or the drum (94), wherein in particular the wheel, the roller or the drum (94) can be rotated about an axle (114) that is aligned orthogonal to a common plane of the arms (22, 23, 24).

11. The wheel holder (2) according to any of claims 8 to 10,
wherein the at least one drive device (64) comprises an elastic element (84), in particular a spiral spring, which is adapted to drive the force transmitting element (74).

12. The wheel holder (2) according to any of claims 8 to 11,
wherein the at least one drive device (64) is arranged outside of the center (28) of the wheel holder (2), wherein in particular the at least one drive device (64) is arranged in a region between two arms (22, 23, 24) of the wheel holder (2).

13. The wheel holder (2) according to any of the preceding claims,
wherein the wheel holder (2) comprises three arms (22, 23, 24), wherein the three arms (22, 23, 24) are arranged in particular at angular distances of 120° about the center (28) of the wheel holder (2).

14. A method of mounting a wheel holder (2) according to any of claims 1 to 13 to a wheel (1), in particular to a wheel (1) of a motor vehicle, said method comprising the steps of:
bringing the freewheeling system (100) into a mounting state in which the movable elements (32, 33, 34) are movable outward in a radial direction and inward movement of the movable elements (32, 33, 34) is blocked;
moving the movable elements (32, 33, 34) outward in radial direction so as to increase the arm lengths of the arms (22, 23, 24);
applying the wheel holder (2) to a wheel (1), in particular a wheel (1) of a motor vehicle; and
bringing the freewheeling system (100) into a fixing state in which the movable elements (32, 33, 34) are movable inward in radial direction and outward movement of the movable elements (32, 33, 34) is blocked; and
moving the movable elements (32, 33, 34) in the direction towards the center (28) so as to fix the wheel holder (2) to the wheel (1);
wherein the method comprises in particular applying forces directed towards the center (28) to the movable elements (32, 33, 34) by a clamping device (120, 122).

15. A method of releasing a wheel holder (2) according to any of claims 1 to 13 from a wheel (1), in particular from a wheel (1) of a motor vehicle,
said method comprising:
releasing a clamping device (120, 122) and/or bringing the freewheeling system (100) into a mounting state in which the movable elements (32, 33, 34) can be moved outward in radial direction and inward movement of the movable elements (32, 33, 34) is blocked;
moving the movable elements (32, 33, 34) outward in radial direction so as to increase the lengths of the arms (22, 23, 24); and
removing the wheel holder (2) from the wheel (1).

## Revendications

1. Support de roue (2) à fixer sur une roue (1), en particulier sur une roue de véhicule automobile, le support de roue (2) présentant :
au moins deux bras (22, 23, 24) qui s'étendent radialement vers l'extérieur depuis une plaque de base (10) du support de roue (2) ; sachant que chacun des bras (22, 23, 24) présente au moins un élément mobile (32, 33, 34) qui est mobile en direction radiale ;
un élément rotatif central (40) qui est agencé de manière à tourner dans un centre (28) du support de roue (2) ;
au moins deux éléments de couplage (52, 53, 54) qui s'étendent respectivement entre l'un des éléments mobiles (32, 33, 34) et l'élément rotatif central de telle sorte que les éléments mobiles (32, 33, 34) se déplacent en direction radiale lors de la rotation de l'élément rotatif (40) :
**caractérisé en ce que** :
l'élément rotatif (40) est monté sur la plaque de base (10) du support de roue par l'intermédiaire d'un système de roue libre (100) et que le système de roue libre (100) présente au moins un état de marche où l'élément rotatif (40) peut tourner dans une direction de roue libre et où une rotation de l'élément rotatif (40) dans une direction de blocage opposée à la direction de roue libre est bloquée.

2. Le support de roue (2) selon la revendication 1, dans lequel le système de roue libre (100) peut commuter entre un premier état de marche où l'élément rotatif (40) peut tourner dans le sens des aiguilles d'une montre, une rotation de l'élément rotatif (40) dans le sens contraire des aiguilles d'une montre étant bloquée, et un deuxième état de marche où l'élément rotatif (40) peut tourner dans le sens contraire des aiguilles d'une montre, une rotation de l'élément rotatif (40) dans le sens des aiguilles d'une montre étant bloquée, sachant que le système de roue libre (100) peut être commuté en particulier dans un troisième état de marche où l'élément rotatif (40) peut tourner dans les deux directions.

3. Le support de roue (2) selon l'une quelconque des revendications précédentes, dans lequel le support de roue (2) présente en outre un dispositif de serrage (120, 122) réalisé de manière à exercer, à l'état serré, une force sur le système de roue libre (100) afin d'exercer des forces supplémentaires sur les éléments mobiles (32, 33, 34) qui sont orientés vers le centre (28) du support de roue (2) par la rotation du système de roue libre (100).

4. Le support de roue (2) selon la revendication 3, dans lequel le dispositif de serrage (120, 122) comprend une poignée de serrage (122) et un élément de transmission de la force de serrage (120) qui est réalisé de manière à transférer une force exercée sur la poignée de serrage (122) sur le système de roue libre (100).

5. Le support de roue (2) selon la revendication 3 ou 4, dans lequel le dispositif de serrage (120, 122) présente un mécanisme de blocage (124) qui est réalisé de manière à arrêter le dispositif de serrage (120, 122) à l'état serré, sachant que le mécanisme de blocage (140) comprend en particulier un mécanisme à cliquet libérable.

6. Le support de roue (2) selon la revendication 5, dans lequel l'élément de transmission de la force de serrage (120) comprend une tige, une chaîne, un câble ou une corde, une courroie et/ou un système hydraulique.

7. Le support de roue (2) selon l'une quelconque des revendications 4 à 6, dans lequel le système de roue libre (100) comprend un corps principal (108) fixé de manière rotative à la plaque de base (10) et un corps rotatif (103) relié à l'élément rotatif (40) et dans lequel l'élément de transmission de la force (120) est relié au corps principal (108) du système de roue libre (100).

8. Le support de roue (2) selon l'une quelconque des revendications précédentes, avec au moins un dispositif d'entraînement (64), qui est relié à l'un des éléments mobiles (32, 33, 34) par l'intermédiaire d'un élément de transmission de la force (74) et qui est réalisé de manière à exercer, via l'élément de transmission de la force (74), une force orientée vers le centre (28) du support de roue (2) sur l'élément mobile (34) concerné.

9. Le support de roue (2) selon la revendication 8, dans lequel l'élément de transmission de la force (74), un au moins, s'étend de manière sensiblement parallèle à l'un des bras (22, 23, 24), en particulier le long d'un des bras (22, 23, 24), et/ou dans lequel l'élément de transmission de la force (74), un au moins, comprend une chaîne, un câble, une corde, une courroie ou une tige.

10. Le support de roue (2) selon la revendication 8 ou 9, dans lequel le dispositif d'entraînement (64), un au moins, présente une roue, une poulie ou un tambour (94) et dans lequel l'élément de transmission de la force (74), un au moins, peut être enroulé sur la roue, la poulie ou le tambour (94), dans lequel la roue, la poulie ou le tambour (94) peut, en particulier, tourner autour d'un axe (114) qui est orienté orthogonalement par rapport à un plan commun des bras (22, 23, 24).

11. Le support de roue (2) selon l'une quelconque des revendications 8 à 10, dans lequel le dispositif d'entraînement (64), un au moins, présente un élément élastique (84), en particulier un ressort hélicoïdal, réalisé de manière à entraîner l'élément de transmission de la force (74).

12. Le support de roue (2) selon l'une quelconque des revendications 8 à 11, dans lequel le dispositif d'entraînement (64), un au moins, est disposé en dehors du centre (28) du support de roue (2), dans lequel le dispositif d'entraînement (64), un au moins, est en particulier disposé dans une zone entre deux bras (22, 23, 24) du support de roue (2).

13. Le support de roue (2) selon l'une quelconque des revendications précédentes, dans lequel le support de roue (2) présente trois bras (22, 23, 24), dans lequel les trois bras (22, 23, 24) sont en particulier disposés à des intervalles angulaires de 120° autour du centre (28) du support de roue (2).

14. Procédé de montage d'un support de roue (2) selon l'une quelconque des revendications 1 à 13 sur une roue (1), en particulier sur une roue (1) de véhicule automobile, le procédé comprenant
de mettre le système de roue libre (100) dans un état de montage dans lequel les éléments mobiles (32, 33, 34) sont mobiles en direction radiale vers l'extérieur et où le déplacement des éléments mobiles (32, 33, 34) vers l'intérieur est bloqué ;
de déplacer les éléments mobiles (32, 33, 34) en direction radiale vers l'extérieur en vue d'agrandir les longueurs des bras (22, 23, 24) ;
de monter le support de roue (2) sur une roue (1), en particulier une roue (1) de véhicule automobile ; et
de mettre le système de roue libre (100) dans un état de fixation dans lequel les éléments mobiles (32, 33, 34) sont mobiles en direction radiale vers l'intérieur et un déplacement des éléments mobiles (32, 33, 34) vers l'extérieur est bloqué ; et
de déplacer les éléments mobiles (32, 33, 34) en direction du centre (28) afin de fixer le support de roue (2) sur la roue ;
le procédé comprenant en particulier d'exercer sur les éléments mobiles (32, 33, 34) des forces orientées vers le centre (28) par le biais d'un dispositif de serrage (120, 122).

15. Procédé de desserrage d'un support de roue (2) selon l'une quelconque des revendications 1 à 13 d'une roue (1), en particulier d'une roue (1) d'un véhicule automobile, le procédé comprenant
de desserrer un dispositif de serrage (120, 122) et/ou de mettre le système de roue libre (100) dans un état de montage dans lequel les éléments mobiles (32, 33, 34) sont mobiles en direction radiale vers l'extérieur et où un déplacement des éléments mobiles (32, 33, 34) vers l'intérieur est bloqué ;
de déplacer les éléments mobiles (32, 33, 34) en direction radiale vers l'extérieur en vue d'agrandir les longueurs des bras (22, 23, 24) ; et
d'enlever le support de roue (2) de la roue (1).
